# EUROPEAN PATENT SPECIFICATION

(11) **EP 4 561 346 B1**
(45) Date of publication and mention of the grant of the patent: **04.03.2026**
(21) Application number: 23744829.5
(22) Date of filing: 25.07.2023
(51) Int. Cl.: A01K 61/59

(54) **METHOD AND SYSTEM FOR SUPPORTING MOLTING OF CRUSTACEANS**
VERFAHREN UND SYSTEM ZUR UNTERSTÜTZUNG DER HÄUTUNG VON KRUSTENTIEREN
PROCÉDÉ ET SYSTÈME POUR FAVORISER LA MUE DES CRUSTACÉS

(30) Priority: 29.07.2022 US 202263393581 P; 11.08.2022 EP 22189886
(43) Date of publication of application: 04.06.2025
(73) Proprietor: Signify Holding B.V., 5656 AE Eindhoven (NL)
(72) Inventor: GOPALSAMY, Mathan, Kumar, 5656 AE Eindhoven (NL); PATEL, Manush, Pragneshbhai, 5656 AE Eindhoven (NL); DEIXLER, Peter, 5656 AE Eindhoven (NL); KOH, Jaehan, 5656 AE Eindhoven (NL)
(74) Representative: Verweij, Petronella Daniëlle
(86) International application number: PCT/EP2023/070499
(87) International publication number: WO 2024/023042

(56) References cited:
- EP-A1- 1 808 072
- US-A1- 2022 087 234
- KALIAPERUMAL ET AL: "MAIN REASONS FOR PENAEUS VANNAMEI MOLTING FAILURE", 24 October 2020 (2020-10-24), XP093087468, Retrieved from the Internet <URL:https://www.linkedin.com/pulse/main-reasons-penaeus-vannamei-molting-failure-kaliaperumal-alagu> [retrieved on 20230929]

## Description

### FIELD OF THE INVENTION

This disclosure relates to a method and system for supporting molting of crustaceans, in particular to such method and system wherein molting regions receive a lower irradiance of light than regions outside of the molting regions.

### BACKGROUND

Aquaculture is crucial to meet the growing demand of food consumption and reduce pressure of nutrient need due to an increase of human population. Among several aquaculture species, crustaceans take up significant amount in the growth of aquaculture, contributing about 9.7% (6.4 million tonnes) in global food.

EP1808072A1 discloses a method for directing the displacement of aquatic crustaceans after feeding by utilizing their biological tendency responding to a bright and dark contrast. One of the aims of EP1808072A1 is to eliminate cannibalistic action among the crustaceans.

Besides disease outbreaks, molting failures and cannibalism are among the highest causes of mortality in farmed crustaceans. The prevalence of cannibalistic behavior among many commercially important crustaceans is a significant limiting factor to their culture productivity and profitability in aquaculture . Various biotic and abiotic factors influence cannibalism including stocking densities, molt status, size heterogeneity, photoperiod, light intensity, and availability to refuge and food; however, their relative efficacies are often species or stage dependent.

Crustaceans are especially vulnerable to cannibalism when they are molting. Crustaceans discard their old exoskeletons periodically and simultaneously build a new one in a process known as molting. The molting process assists crustaceans to grow their body through the lifecycle. Frequency of molting or inter-molting period depends on a variety of factors including size (or age) of shrimps. L. vannamei, for example, has been known to molt 50 times on average during a lifetime. The molting cycle of a crustacean can typically be divided into four recurrent stages: inter-molt, pre-molt, the moment of the molting behavior/ecdysis and post-molt.

In light of above, there is a need in the art for technology enabling to further reduce molting failures and/or cannibalism in crustacean farms.

### SUMMARY

The invention is defined by the claims.

A method is disclosed for supporting molting of crustaceans in a volume of water at least partially enclosed by one or more barriers for keeping crustaceans in the volume. The method comprises (i) detecting one or more molting regions in the volume of water. As referred to herein, molting regions are regions where crustaceans are molting and/or expected to be molting at a future time. The method further comprises (ii) based on the detected one or more molting regions, controlling a distribution of irradiance of light throughout the volume of water such that each of the detected one or more molting regions receives, and/or will receive at the future time, an irradiance that is lower than an irradiance that is received, and/or that will be received at the future time, by regions outside of the detected molting regions.

The detection of the one or more molting regions may be based on image acquisition and analysis of images of crustaceans in at least part of the volume of water and/or based on measurement data of water parameters obtained for at least part of the volume of water.

Further, a system is disclosed for supporting molting of crustaceans in a volume of water at least partially enclosed by one or more barriers for keeping crustaceans in the volume of water. The system comprises a molting region detection system for detecting one or more molting regions in the volume of water. The molting regions are regions where crustaceans are molting and/or are expected to be molting at a future time. The system also comprises a lighting control system that is configured to control a distribution of irradiance of light throughout the volume of water. The system further comprises a controller that is configured to perform a step of causing, based on the detected one or more regions, the lighting control system to control the distribution of irradiance of light throughout the volume of water such that each of the detected one or more molting regions receives, and/or will receive at the future time, an irradiance that is lower than an irradiance that is received, and/or that will be received at the future time, by regions outside of the detected one or more molting regions.

The system may comprise one or more cameras for capturing one or more images of at least part of the volume of water and a controller configured to detect the one or more molting regions based on image analysis of the captured images of the at least part of the volume of water. Alternatively, or additionally, the system may comprise one or more sensors for measuring data indicative of one or more values of one or more parameters of water in at least part of the volume of water and a controller is configured to detect the one or more molting regions based on analysis of the measurement data of parameters of water in the at least part of the volume of water. The analysis may comprise detecting changes or trends in the measurement data.

The method and system aid survival of crustaceans during their molting stage and reduces cannibalism by other shrimps that are present in the same volume of water. The regions outside of the molting regions may be referred to as non-molting regions. By controlling the irradiance distribution of light such that the molting regions receive a lower irradiance than the non-molting regions, the molting regions will be darker than the non-molting regions. The disclosed method and system enable to ensure that, irrespective in which region of the volume of water the molting crustaceans are or are expected to be, a dark environment can be created in that region. Consequently, the molting crustaceans will be less visible to non-molting crustaceans reducing the probability that the non-molting crustaceans will feed on the molting crustaceans. Further, it is known that, in general, non-molting crustaceans tend to move to lighter areas, whereas crustaceans that are molting prefer to remain in darker areas. As a result, the non-molting crustaceans will move away from the molting regions, towards lighter regions. Herewith, the occurrence of cannibalism, which is mainly caused by non-molting crustaceans eating molting crustaceans, is reduced. The method and system are especially advantageous in that they do not require to lure molting crustaceans to predetermined darker region in the volume of water. This is less effective, because molting crustaceans tend to move less and be less active than non-molting crustaceans. Hence, it is quite difficult to cause molting crustaceans to move towards a predefined region.

Further, the molting crustaceans are less prone to stress when they sit in a dark region, which may negatively influence the molting process and which may even cause molting failures. Hence, the method and system disclosed herein also reduce the occurrence of molting failures.

The one or more molting regions may be more than 70% dimmer than the other region, preferably more than 80% dimmer, more preferably more than 90% dimmer. **In** some cases, it shall be dimmer than moonlight in meter deep water (<10 lux).

As referred to herein, a region may be understood as a three-dimensional sub-volume within the volume of water. The barriers referred to may be natural barriers and/or artificial barriers. Shrimps, for example, are typically grown in fish tanks. In such case, the barriers may be understood to be the side wall(s) of the fish tank.

Detection of one or more molting regions may be understood to refer to finding out where in the volume of water the one or more molting regions are.

The crustaceans may belong to the superfamily Penaeoidea, preferably to the families Aristeidae or Penaeidae, such as gamba shrimps and/or tiger prawns and/or whiteleg shrimps and/or Atlantic white shrimps and/or Indian prawns.

As referred to herein, an irradiance as received by a region may be understood as an amount of energy of electromagnetic radiation that travels through a (virtual) outer surface of the region per unit of time divided by the surface area of the outer surface of the region.

The distribution of irradiance may be understood to refer to the fact that each region within the volume of water may receive a different amount of irradiance. Regions that receive a relatively low irradiance may be referred to as dark regions, whereas regions that receive a relatively high irradiance may be referred to as light regions.

In an embodiment, controlling the distribution of irradiance of light comprises controlling an illumination system that is configured to selectively illuminate regions within the volume of water. In an embodiment of the system, the lighting control system comprises an illumination system that is configured to selectively illuminate regions within the volume of water.

These embodiments provide a convenient manner for creating darker regions within the volume of water. This can for example be accomplished by controlling the illumination system to selectively illuminate the regions outside of the molting regions yet not, or at least to a lesser extent, the molting regions themselves. To illustrate, the illumination system may be configured to dynamically direct light to selected regions in the volume of water, in this case to the non-molting regions, and not, at least to a lesser extent, to the detected molting regions herewith causing the molting regions to receive a lower irradiance of light than the non-molting regions.

The illumination system may comprise a plurality of separately controllable light sources. Preferably one or more of the plurality of light sources are submerged in the volume of water. In such embodiment, the step of controlling the illumination system may comprise separately controlling the plurality of light sources of the illumination system.

The plurality of separately controllable light sources are convenient for controlling the distribution of irradiance. Each light source of the plurality of light sources may be configured to illuminate a predetermined sub-volume within the volume of water, e.g. in the sense that each light source has a fixed position and orientation relative to the volume of water. In such case, upon detection of the one or more molting regions, of each sub-volume belonging to a detected molting region, the radiant power of the associated light source, i.e. the light source configured to illuminate the sub-volume in question, is lowered in order to lower the irradiance as received by the one or more molting regions. Preferably, light sources configured to illuminate sub-volumes belonging to detected molting regions are switched off so that they do not illuminate the molting regions.

Some of the light sources, e.g. all of the light sources, may be movable in the sense that their position and/or orientation relative to the volume of water can be adapted. Such movable light source can illuminate selected sub-volumes of the volume of water. In such case, upon detection of the one or more molting regions, the position and/or orientation of each movable light source is controlled such that is does not illuminate a detected molting region.

Detecting the one or more molting regions comprises obtaining image data representing one or more images of at least part of the volume of water. Optionally these image data are received from one or more cameras as described below. The disclosed method further comprises identifying from the image data one or more crustaceans in one or more regions of the volume of water. The disclosed method also comprises determining from the image data that the identified one or more crustaceans are molting and assigning the one or more regions as the one or more molting regions. Additionally or alternatively, the disclosed method comprises determining from the image data when and in which one or more future regions the identified one more crustaceans are expected to mold and assigning the one or more future regions as the one or more molting regions.

The disclosed system comprises one or more cameras for capturing one or more images of at least part of the volume of water. In this system, the controller is configured to perform steps of obtaining image data representing the one or more images captured by the one or more cameras, and identifying from the image data one or more crustaceans in one or more regions of the volume of water. The controller is also configured to perform steps of:
- determining from the image data that the identified one or more crustaceans are molting and assigning the one or more regions as the one or more molting regions, and/or
- determining from the image data when and in which one or more future regions the identified one more crustaceans are expected to mold and assigning the one or more future regions as the one or more molting regions.

These methods and systems enable to detect the molting regions in a conveniently and accurately.

The one or more cameras may be submerged inside the volume of water, preferably at the bottom of the volume of water. However, when the volume of water is relatively shallow, then the one or more cameras may be positioned outside of the volume of water as well, e.g. above the volume of water.

The cameras may be configured to capture images by capturing light of a specific wavelength range, e.g. infrared light. This allows to render visible crustaceans even if the water in the volume has a relatively high turbidity. Each camera may comprises a multispectral sensor.

Identifying one or more crustaceans from the image data may be performed by applying to the images as represented by the image data, known image analysis techniques in the art. Such image analysis techniques may include machine learning techniques, such as neural networks, e.g. cascade neural networks. Additionally or alternatively, such image analysis techniques comprise pixel clustering techniques known in the art.

Determining the molting regions based on the image data may be performed by detecting one or more pixel clusters in the one or more images, each pixel cluster representing one or more crustaceans and determining, for each detected pixel cluster, that the one or more crustaceans represented by the pixel group are molting and/or when the one or more crustaceans represented by the pixel group are expected to be molting.

However, machine learning methods are not strictly required. **In an** embodiment, detecting one or more crustaceans comprises a human operator analyzing the obtained images in order to identify which pixels in the images represent crustaceans, or even more specifically, which pixels in the images represent crustaceans that are molting or are going to be molt.

Preferably, of course, the control system knows which spatial positions are visible in each image so that upon detection of one or more crustaceans in an image, the system will know in which region the detected one or more crustaceans are.

Determining that the identified one or more crustaceans are molting may be performed by a human operator analyzing images to determine whether the crustaceans are molting or not.

Additionally or alternatively, determining that the identified one or more crustaceans are molting may be performed by performing machine learning algorithms. Input to such algorithms may be the obtained image data and/or measurement data indicating one or more values of one or more parameters as explained in more detail below.

Additionally or alternatively, the images can be used for monitoring an activity of crustaceans, for example whether they are feeding, searching feed, resting, swimming etc. Based on the monitored activity can it be determined whether the crustaceans are molting and/or can it be predicted when the crustaceans will be molting.

The method may comprise - and the controller of the system may be configured to perform a step of - detecting one or more pixel clusters in the one or more images, each pixel cluster representing one or more crustaceans. Detecting such pixel clusters may be performed using any of the image analysis techniques referred to above. The detecting step may comprise performing a machine learning method. This machine learning method comprises constructing a model based on training data, the training data associating each of a plurality of reference pixel clusters, each reference pixel cluster representing one or more crustaceans, with an indication whether the reference pixel cluster in question represents one or more crustaceans that are molting or not and/or with an indication how long it will take for the one or more crustaceans represented by the reference pixel cluster in question to initiate molting. The machine learning method also comprises using the constructed model for determining, for each detected pixel cluster, that the one or more crustaceans represented by the pixel cluster are molting and/or when the one or more crustaceans represented by the pixel cluster are expected to be molting.

The training data may be formed by many, e.g. thousands of, images showing crustaceans in different states, some molting, others not molting, wherein the training data comprises for each shown crustacean an indication whether it is molting or not. Such training data can be used to train a neural network for example for recognizing molting crustaceans in images.

In embodiment, the method also comprises obtaining the training data described herein. This may for example be performed by showing many images showing crustaceans in different states to an expert person, and the expert person inputting, for each shown crustacean in the images, an indication whether it is molting or not.

The training data may associate respective movies of crustaceans with a respective indication whether the movie in question represents one or more crustaceans that are molting or not and/or with an indication how long it will take for the one or more crustaceans represented by the movie in question to initiate molting. Then, preferably, the image data obtained from the volume of water represent one or more movies of the volume of water.

The one or more images may comprise a first image representing at least part of the volume of water at a first time and a second image representing at least part of the volume of water at a second time. These two parts of the volume referred to may be the same part of different parts of the volume. In that case, detecting the one or more molting regions may comprise detecting a first pixel cluster in the first image representing one or more crustaceans, and detecting a second pixel cluster in the second image representing one or more crustaceans, and determining that the first and second pixel cluster represent the same one or more crustaceans. Such embodiment may then comprise, based on this determination, and based on the first resp. second pixel cluster's position within the first resp. second image, determining a movement, preferably a speed and direction of movement, of the one or more crustaceans represented by the first and second pixel cluster, and based on the determined movement, predicting a position within the volume of water, at the future time, of the one or more crustaceans represented by the first and second pixel cluster.

This embodiment enables to accurately detect the molting regions in that is enables to accurately predict where the one or more crustaceans are going to molt.

With the prediction of the position at the future time, since the one or more crustaceans are also predicted to molt at the future time, a future molting region is detected.

In an embodiment, detecting the one or more molting regions comprises obtaining, for each of a plurality of positions in the volume of water, measurement data indicating one or more values of one or more parameters, and determining, based on the one or more values of the one or more parameters, that one or more crustaceans are molting and/or are expected to be molting at the future time. Herein the one or more parameters comprise at least one of an ammonia level, a CO₂ level, an amount of water-dissolved oxygen, and pH.

In an embodiment of the system, the system comprises one or more such sensors. In such embodiment of the system, the controller is configured to perform steps of receiving, from the one or more sensors, measurement data indicating one or more values of one or more parameters, and determining, based on the one or more values of the one or more parameters, that one or more crustaceans are molting and/or are expected to be molting at the future time. This embodiment allows to accurately determine the molting regions.

Existing knowledge on molting of crustaceans, e.g., https://www.linkedin.com/pulse/main-reasons-penaeus-vannamei-molting-failure-kaliaperumal-alagu/, indicates that when crustaceans are in molting stage, they need to consume twice as much dissolved oxygen as normal. Therefore, monitoring dissolved oxygen in the volume of water and identifying a change on dissolved oxygen may give an indication that one or more crustaceans are molting and/or are expected to be molting soon. Monitoring dissolved oxygen at a plurality of positions within the volume of water may provide location information of one or more crustaceans that are molting and/or are expected to be molting soon.

A scientific article on Oxygen Consumption and Ammonia Excretion During the Moulting Cycle in the Shrimp Xiphopenaeus kroyeri, by P.S.M Carvalho and V.N Phan, (ref. Comparative Biochemistry and Physiology Part A: Molecular & Integrative Physiology Volume 119, Issue 3, March 1998, Pages 839-844), quantifies respiration rate, and therewith CO₂, and ammonia excretion of shrimps in different moulting stages. Therefore, monitoring CO₂ levels and ammonia levels in the volume of water and identifying a change in any one of these levels may give an indication that one or more crustaceans are molting and/or are expected to be molting soon.

A scientific report on Effects of CO2-induced pH reduction on the exoskeleton structure and biophotonic properties of the shrimp Lysmata californica, by Jennifer R. A. Taylor et al., (ref. Sci Rep 5, 10608 (2015), shows that it is known that CO₂ induced pH reduction and that it is also known that shrimp create CO₂ and that shrimp show different activity levels while molting. Internet publication "Water Parameters: Everything about pH in Shrimp Tank", by Micheal in Home,Invertebrates,Maintenance,Shrimps, (ref. https://aquariumbreeder.com/water-parameters-everything-about-ph-in-shrimp-tank/), indicates that signs of sub-optimal pH include molting problems of shrimp such as loose shell, soft shell or too hard shell, or can indicate irregularity in molt. Therefore, monitoring pH levels in the volume of water and identifying a change in pH may give an indication that one or more crustaceans are molting and/or are expected to be molting soon

The embodiment of the method may also be performed using a machine learning method. Likewise, in the embodiment of the system, the controller may be configured to perform a machine learning algorithm. In that case, the method may comprise, and the controller may be configured to perform steps of:
- constructing a model based on training data, the training data associating each of a plurality of sets of one or more parameter values for one or more respective input parameters, each set of parameter values being associated with a reference region (in a reference volume of water) with an indication whether the set of one or more parameter values in question indicates that one or more crustaceans are molting in the reference region or not and/or with an indication how long it will take for one or more crustaceans in the reference region to initiate molting, and
- using the constructed model for determining, for each set of one or more values obtained for a region in the volume of water, that the one or more crustaceans in that region are molting and/or when the one or more crustaceans in that region are expected to be molting.

The method may comprise - and the controller may be configured to perform steps of -repeating steps (i) and (ii) herewith updating the detected molting regions and updating the distribution of irradiance throughout the volume of water. This is for example performed such that each of the updated, detected one or more molting regions receives, and/or will receive at a second future time, an irradiance that is lower than an irradiance that is received, and/or that will be received at the second future time, by regions outside of the updated, detected molting regions.

This embodiment allows to ensure that molting crustaceans remain in relatively dark areas even when they move during molting. The dark regions may be understood to "follow" the molting crustaceans.

The method may comprise - and the controller of the system may be configured to perform steps of - determining, for each of the detected one or more molting regions, in which stage of molting the crustaceans in the respective one or more molting regions are, and controlling a distribution of irradiance of light throughout the volume of water on the basis of the molting stages for the respective one or more molting regions.

This embodiment allows each molting region to receive an appropriate irradiance, or more specifically an appropriate irradiance spectrum (irradiance vs wavelength), that is suitable for the molting stage of the crustaceans in the molting region in question.

The determined molting stage for a region may for example be an average molting stage of crustaceans in that molting region.

The molting stage for a region may be determined similarly as to how molting crustaceans can be identified and/or similarly as to how it can be determined that crustaceans are molting, for example based on image data, measurement data and using machine learning.

In an embodiment, the method comprises luring away non-molting crustaceans from the one or more molting regions, preferably by providing crustacean feed outside of the molting regions.

This embodiment enables to further reduce the extent to which non-molting crustaceans cannibalize on the molting crustaceans. The non-molting crustaceans are more active and consumer more feed than molting crustaceans. Thus, providing crustacean feed outside of the molting regions lures the non-molting crustaceans to these regions outside of the molting regions to a greater extent than the molting crustaceans.

Additionally or alternatively to luring away non-molting crustaceans as described above, the method may comprise driving non-molting crustaceans away from the one or more molting regions, preferably by scaring the non-molting crustaceans away.

One aspect of this disclosure relates to a computer program comprising instructions for causing any of the systems for supporting molting of crustaceans to perform any of the methods described herein.

One aspect of this disclosure relates to a computer comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In one aspect, embodiments of the present invention may relate to a computer-implemented method for controlling a system for supporting molting of crustaceans described herein.

Moreover, a computer program for carrying out the methods described herein, as well as a non-transitory computer readable storage-medium storing the computer program are provided. A computer program may, for example, be downloaded (updated) to the existing systems or be stored upon manufacturing of these systems.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
Figs. 1A and 1B respectively illustrate a side view and top view of a system according to an embodiment;
Figs. 2A, 2B, 2C illustrate dynamic light islands providing safe harbors according to an embodiment;
Fig. 3 illustrates an embodiment that may be useful when it is detected that crustaceans are attacking other crustaceans;
Fig. 4 depicts a block diagram illustrating a data processing system according to an embodiment.

### DETAILED DESCRIPTION OF THE DRAWINGS

In the figures, identical reference numbers indicate identical or similar elements.

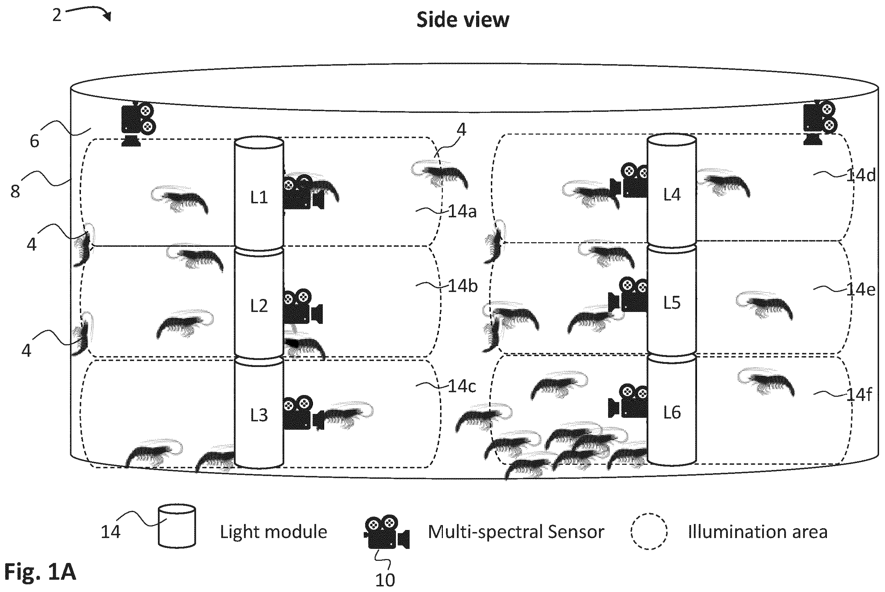

Figure 1A illustrates a side view of system 2 for supporting molting of crustaceans 4, such as shrimps, in a volume of water 6 at least partially enclosed by one or more barriers 8 for keeping crustaceans 4 in the volume of water 6. The one or more barriers 8 are for example the side walls of a fish tank (as exemplified in figure 1A). The system 2 comprises a molting region detection system 10 for detecting one or more molting regions in the volume of water. In figure 1A such molting region detection system 10 is embodied as multiple multi-spectral light sensors. The molting region detection system 10 may additionally or alternatively comprise one or more cameras for capturing one or more images of at least part of the volume of water. In such case, a controller (not shown) can then obtaining image data representing the one or more images captured by the one or more cameras, and identifying from the image data one or more crustaceans in one or more regions of the volume of water. Subsequently, the controller can then determine from the image data that the identified one or more crustaceans are molting herewith determining the one or more regions accommodating the identified one or more crustaceans as one or more molting regions and/or determining from the image data when and in which one or more regions the identified one more crustaceans are expected to mold herewith determining the one or more molting regions.

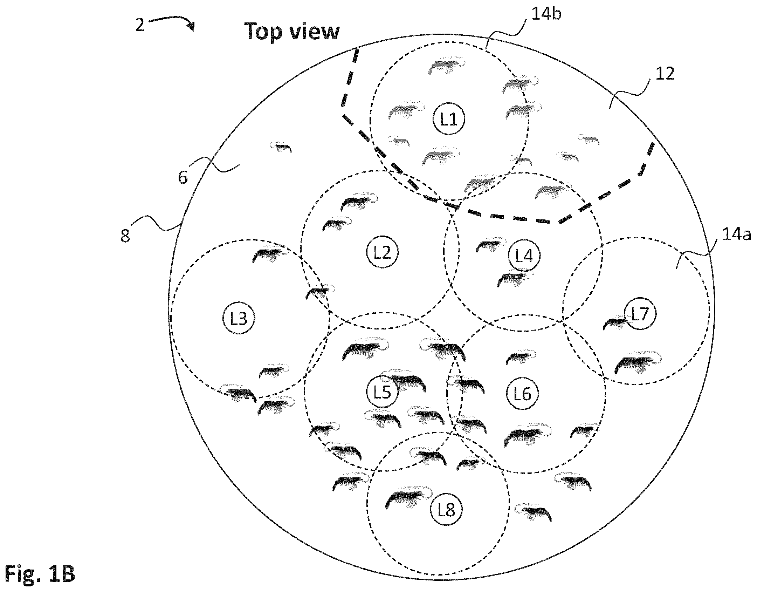

Figure 1A does not indicate molting regions. However, Figure 1B, which is a top view of the system 2 of Figure 1A does. Molting regions 12 are regions where crustaceans 4 are molting and/or are expected to be molting at a future time. In the figures, light grey crustaceans indicate crustaceans that are molting, whereas the black crustaceans indicate non-molting crustaceans. The system 2 also comprises a lighting control system that is configured to control a distribution of irradiance of light throughout the volume of water. In Figures 1A and 1B, the lighting control system is embodied as an illumination system that is configured to selectively illuminate regions within the volume of water, in particular as an illumination system comprising separately controllable light modules 14 that are positioned throughout the volume of water 6. Figure 1A illustrates for example that light module L1 can illuminate region 14a, light module L2 can illuminate region 14b, light module L3 can illuminate region 14c et cetera.

The system also comprises a controller that is configured to perform a step of, based on the detected one or more regions 12, causing the lighting control system 14 to control the distribution of irradiance of light throughout the volume of water 6 such that each of the detected one or more molting regions 12 receives, and/or will receive at the future time, an irradiance that is lower than an irradiance that is received, and/or that will be received at the future time, by regions outside of the detected molting regions. The one or more detected molting regions 12 are thus relatively dark regions in the volume of water 6. As a result, the molting crustaceans in that region are less prone of being cannibalized, for example by non-molting crustaceans which are also present in the volume of water 6. Referring to figure 1B, the light generated by light module L1 preferably has a lower irradiance value than the light generated by the other light modules, so that molting region 12 is a relatively dark region within volume of water 6.

Hence, to reduce cannibalization, a multitude of lighting zones may be created according to information which may be gathered by multiple (types of) sensors including RGB cameras. The system 2 may not only detect cannibalistic behavior but may actively reduce it to lowest levels possible by assisting crustaceans that are in molting stage by smartly creating a 3-dimensional lightscape with different light levels in different regions of the volume of water, e.g. in different regions in a fish tank. Based on the crustacean population and how the shrimps are behaving in this specific area of the tank.

It has been known that crustaceans, such as shrimps, exhibit significantly different locomotive and feeding behaviors during stages of molting. Once molting stage is predicted, full and continuous aeration and key minerals are preferably be provided. Feed delivery is preferably reduced between 10 and 30% in the predicted massive molting days. The average feed consumption of the crustaceans is reported to increase 18% from post-molt to early pre-molt. Since molting is a complex and tedious process, it is usually associated by high failures owing to several factors.

The system may make use of machine leaning techniques known in the art, for example in order to identify crustaceans and/or in order to identify that crustaceans are molting or will be molting, e.g. based on their behavior, and/or in order to predict where molting crustaceans are going to be. Then, the system may orchestrate light needs of crustaceans throughout their entire production lifecycle from post-larvae to harvest stage. The system assists farmers in promoting crustacean growth and reducing mortality during the molting stage.

In a preferred embodiment, underwater illumination is provided by a modular vertical luminaire (see Figure 1A) where each of its modules is individually controllable delivering specific light level and wavelengths for a targeted region of water within the shrimp tank or ponds. Shrimps and their behavior may be monitored using a group of imagery and auditory sensing devices (in addition to traditional water quality sensors such as pH, ammonia level, CO₂ level and Dissolved Oxygen etc. known from prior art). In a preferred embodiment, imagery device is a multispectral camera (red, blue, green, infrared etc.) which can be embedded as part of a light module. In a cost-constrained farm, a limited number of sensors can be placed at top and bottom of the tank for optimized monitoring shrimps during planktonic (i.e. post-larvae residing on top of the water) or benthic lifestyle (i.e. older shrimps residing at the bottom of tank) at various ages.

As described herein, the system 2 preferably comprises a controller (not shown in figures 1A and 1B) that may be configured to determine, e.g. identify, molting regions 12. The controller may determine these regions based on measurement data as measured by one or more sensors that may be present in the volume of water 6. Non-limiting examples of such sensors are a ammonia sensor for measuring an ammonia level at a position within the volume of water, an oxygen sensor for measuring an amount of water-dissolved oxygen at a position within the volume of water, a pH sensor for measuring a pH at a position within the volume of water.

Based on the measured parameters can the controller determine where in the volume of water crustaceans are molting (or are likely to be molting). Additionally or alternatively, the controller may determined based on the measured parameters where crustaceans will be molting.

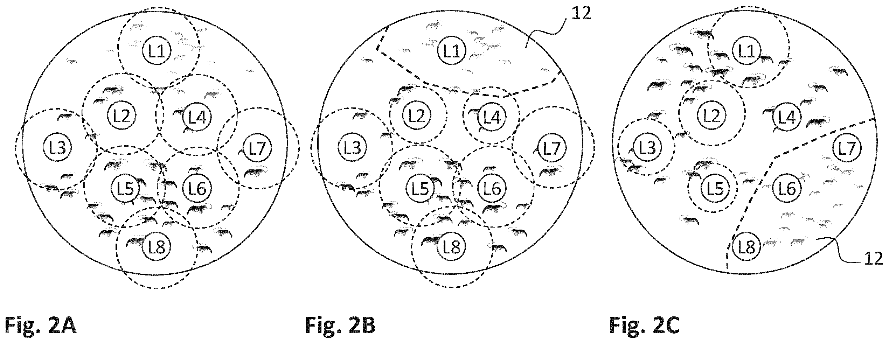

Figures 2A, 2B, 2C illustrate dynamic light islands providing safe harbors for vulnerable shrimps to hide from predators. In particular, figures 2A, 2B, 2C illustrate a fish tank at three subsequent times t1, t2, t3.

At t1 (Figure 2A), no molting region has been detected yet by the system 2. Hence, all light modules generate light having the same irradiance value. Therefore, the irradiance value is relatively homogeneous throughout the volume of water.

At 2, however, the system has detected a molting region 12. Hence, one of the light modules, light module L1, is switched off, so that molting region 12 receives a lower irradiance than the other regions within volume of water 6.

The system may have identified this molting region by the controller performing image analysis techniques, which enable the controller to recognize crustaceans in received images, e.g. images as obtained by one or more cameras, and even further, to recognize that some of these crustaceans are molting (or will be molting).

After t2, the molting crustaceans may, of course, move through the volume of water. The controller may be configured to track the molting crustaceans through the volume of water based on obtained images, such as based on obtained video recordings. This may involve the controller determining that two pixel clusters, one in a first image taken at t2 and another in another image taken at a time after 2, represent the same crustaceans. Based on this, the controller may for example determine a speed and direction of movement of the molting crustaceans through the volume of water 6. Based on the determined direction and speed of the molting crustaceans can the controller determine where the molting crustaceans will be at time t3.

In the depicted embodiment, at time t3, the molting crustaceans have moved to a region on the bottom right (see figure 2C). As a result, the lighting modules in and/or near this region are switched off in order to cause the molting region to be relatively dark. In figure 2C lighting modules L4, L6, L7, L8 are switched off.

It should be appreciated that it is not strictly necessary to predict where the molting crustaceans will be. In an embodiment, the controller may simply track molting crustaceans as described above, and ensure that, wherever they are, they will be in a relatively dark region.

In one particular embodiment, the proposed method for supporting molting of crustaceans works as follows:
1. Firstly, a set of images are gathered from multi-spectral sensors for a short period of time (P1, say 5 seconds)
2. Secondly, a detector algorithm as performed by a controller described herein, processes the gathered images to localize and quantify crustaceans, e.g. shrimps, as well as feed pellets in each image. In a preferred embodiment, the detection algorithm is a 'cascaded convolutional neural networks' with different type of outputs such as bounding boxes, segmentation masks, and scalar values. The first network may extract static information from each image and the second network may extract temporal and contextual information in a short-time period (P1, say 5 seconds) from output of first network on sequence of images. A third network may estimate crustaceans properties over a longer period (P2, say 15 minutes) by processing results from the 1st network and 2nd network over time period P2. Typical output of this network may include, but is not limited to, molting status of shrimps, starvation level of shrimps and vulnerability of shrimps with respect to cannibalism. An auditory signal may be fused with imagery information to gain information on the shrimp's current feeding status and starvation level. Following are some of the metrics that may be generated by the detector algorithm:
   a. For each individual crustacean: Location (in pixel co-ordinates), size (in pixels), color (RGB values) and gut fill level (0 to 100%)
   b. Shrimp's current activity type (such as feeding, searching feed, resting, swimming etc.)
   c. For each feed pellet: Location (in pixel co-ordinates), size (in pixels), and current status of integrity (0-100%)
   d. Distance metrices for crustacean - crustacean (D1) and crustacean -feed (D2) from crustacean locations (L1) and feed locations (L2)
   e. molting status (such as pre-molting, molting, post-molting) of crustacean
   f. starvation level of crustaceans (0-100%, relative individual shrimp on a given day)
   g. vulnerability of crustacean (-1 to +0, -1 being most vulnerable, 0 neither vulnerable
   h. Predatoriness (o to 1): 0 being not predatory, 1 being most predatory.

A post-processing algorithm may translate the output of the detector into contextual and physical actions for a given tank, by fusing the detector outputs on images from different cameras in the tank and prior information about tank, cameras, and luminaires. Such an algorithm may take care of removing duplications in metrics from individual cameras and extrapolating the metrics to full tank level for the case that the sensor coverage is smaller than the total body of water.

A light control algorithm may translate the crustaceans metrics at tank level (output of post-processing) into appropriate light control values (e.g. irradiance level) based on a-priori information and heuristic learning. These light islands are customized for the crustaceans inside the specific area and the stage that they belong in i.e. pre molt, molting or post-molting.

When algorithms detect that crustaceans are beginning to exhibit starvation symptoms (i.e. activities such as burrowing, searching for food, click mandibles while the shrimp are eating leftover etc.) during the non-feeding hours, a targeted feed lighting recipe is turned ON which increases crustacean's ability to detect food by shining bright light on yet uneaten feed pellets left over from the previous round of feeding. Cannibalism is known to be high at latter part of starving period (usually at night). The farmer or auto-feeder is notified that the crustaceans exhibit behavior indicative of starvation so that either more feed is provided to the shrimp and/or the frequency of the feeding events is increased.

When the vulnerability of crustaceans is above certain threshold, pre-emptively a lightscape may be applied in the volume of water which is purposefully designed to mitigate cannibalization. For example,

### a. Create and maintain light islands

Data from a combination of light, camera and audio sensors, which may be embedded in the lighting infrastructure, may be used for identifying molting regions. This fused sensor data from a particular multi-sensor-equipped light may provide for each region of the volume of water insights about the developmental stage the crustaceans are in. This information from a first region of the volume of water is then aggregated with the data collected by other luminaires from neighboring light zones. After this information is fused, a multitude of 3-dimensional space clusters may be generated (preferably circular to make it easier to illuminate the cluster uniformly) and the majority population type may be determined in that region using a clustering algorithm such as a K-means clustering algorithm to divide this 2-dimensional space or 3-dimensional space into exact clusters of crustaceans that require assistance/protection as they are in the molting phase vs other shrimps that are not in the molting phase. **In** the most basic implementation, also 2-dimensional decision boundaries could be defined on the water surface; each of the multitude of space clusters is then vertically illuminated with the help of a luminaire suspended above the water surface such that the entire water volume underneath the space cluster is illuminated. A light recipe of a molting region can vary based on the type of crustaceans that are farming and their lighting need during the molting period. This may result in a lightscape of dark/dimmed and illuminated regions in the water tank. n shrimps may be sampled from each region in the 3d plane of the tank and then represent the space with the vector. This vector can be a combination of certain factors such as the number of shrimps that are pre molting, size of these shrimps, whether this region is adjacent to any other zones that has low amount of molting shrimp etc. These regions can be labelled based on the data vector generated to label the cluster in one of the four possible labels which can be: pre-molt, molting, post-molt, non-molting. The lights on these four stages can be customized according to the need of crustaceans in these phases. The lighting needs of crustaceans may vary during these time periods and these light islands can be a way to assist them in a better way to go through the whole process healthily.

### b. Updating these light islands

It is understood that the crustaceans in the volume of water do not stay static and have tendency to move around in the volume of water due to different reasons such as looking for food, just collective movements without clear meaning or moving towards or away from the light sources. The dynamic movement of the crustaceans across the volume of water will cause the changes in vector values assigned to the clusters. This system may adapt and change the lighting system if the vector values change beyond a certain threshold value. Once it has been detected that a label for the cluster changed the lighting can be switched according to the new label assigned.

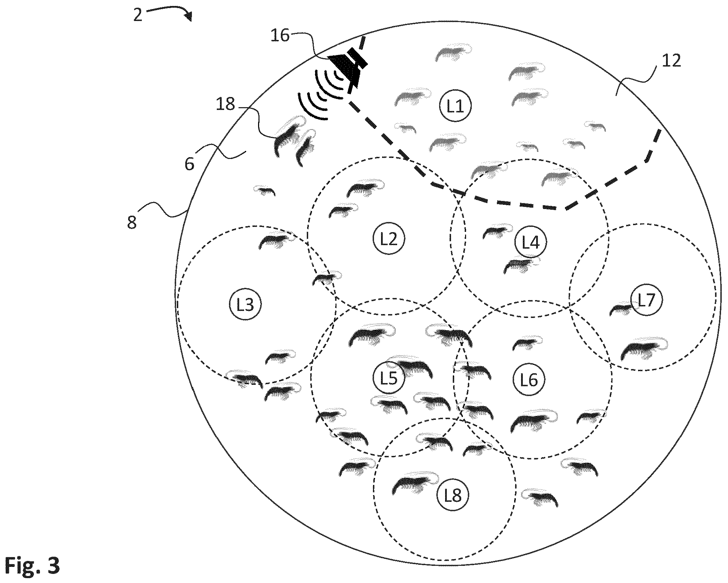

Figure 3 illustrates an embodiment that may be useful when it is detected that crustaceans are attacking other crustaceans
a. When it is detected that a first group of crustaceans 18 is moving towards a molting region 12 where a second group of molting shrimps is present (typically a dark island) and the first group 18 shows cannibalistic tendencies, it is proposed to drive the non-molting crustaceans away, e.g. by utilizing a directional speaker 16 and/or beam steered lighting. Some supporting lights may cause crustaceans to move in a particular direction or to a specific location. Prior art e.g. teaches that crustaceans show locomotion toward the light or move away from the sound of their predators. This behavior may be utilized to turn away the cannibalistic shrimp18 and thereby create a "safe harbor" for the shrimps molting in the molting region 12.
b. In addition, underwater whirlpools can be added to attract attackers to a specific area. This can be induced by velocity changes to the areas of water where intrusion is happening.

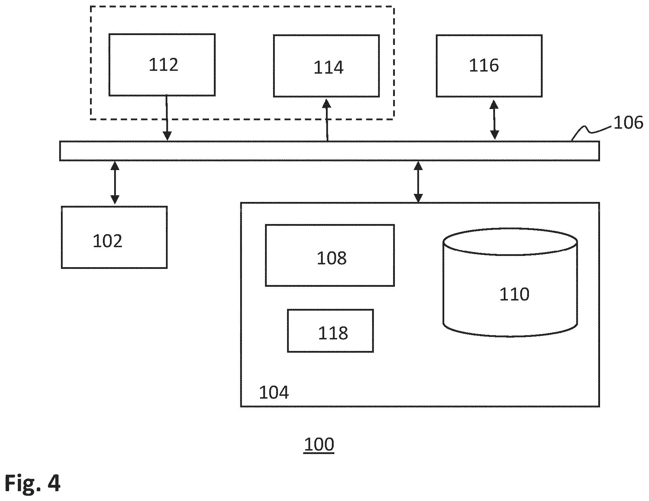

Figure 4 depicts a block diagram illustrating a data processing system according to an embodiment.

As shown in Figure 4, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, a touch-sensitive display, a controller as described herein, one or more sensors as described herein, one or more cameras as described herein, a molting region detection system described herein, or the like. Examples of output devices may include, but are not limited to, a monitor or a display, speakers, a lighting control system, or the like. Input and/or output devices may be coupled to the data processing system either directly or through intervening I/O controllers.

In an embodiment, the input and the output devices may be implemented as a combined input/output device (illustrated in Fig. 4 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in Figure 4, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in Fig. 4) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

In one aspect of the present invention, the data processing system 100 may represent a controller as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention as defined by the appended claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method for supporting molting of crustaceans (4) in a volume of water (6) at least partially enclosed by one or more barriers (8) for keeping crustaceans (4) in the volume (6), **characterised in that** the method comprises :
(i) detecting one or more molting regions (12) in the volume of water (6), the molting regions (12) being regions where crustaceans (4) are molting and/or expected to be molting at a future time, and
(ii) based on the detected one or more molting regions (12), controlling a distribution of irradiance of light throughout the volume of water (6) such that each of the detected one or more molting regions (12) receives, and/or will receive at the future time, an irradiance that is lower than an irradiance that is received, and/or that will be received at the future time respectively, by regions outside of the detected molting regions (12),
wherein detecting the one or more molting regions (12) is based on image acquisition and analysis of images of crustaceans (4) in at least part of the volume of water (6) and/or based on measurement data of water parameters in at least part of the volume of water (6).

2. The method according to claim 1, wherein controlling the distribution of irradiance of light comprises controlling an illumination system (14) that is configured to selectively illuminate regions (14a..14f) within the volume of water.

3. The method according to claim 2, wherein the illumination system (14) comprises a plurality of separately controllable light sources (L1..L6), preferably one or more of the plurality of light sources (L1..L6) being submerged in the volume of water (6), wherein:
the step of controlling the illumination system (14) comprises separately controlling the plurality of light sources (L1..L6) of the illumination system (14).

4. The method according to any of claims 1-3, wherein detecting the one or more molting regions comprises:
- obtaining image data representing one or more images of at least part of the volume of water (6), and
- identifying from the image data one or more crustaceans (4) in one or more regions of the volume of water, and
- determining from the image data that the identified one or more crustaceans (4) are molting and assigning the one or more regions as the one or more molting regions (12), and/or
- determining from the image data when and in which one or more future regions the identified one more crustaceans (4) are expected to mold and assigning the one or more future regions as the one or more molting regions (12).

5. The method according to claim 4, comprising detecting one or more pixel clusters in the one or more images, each pixel cluster representing one or more crustaceans (4), and performing a machine learning method comprising:
- constructing a model based on training data, the training data associating each of a plurality of reference pixel clusters, each reference pixel cluster representing one or more crustaceans (4), with an indication whether the reference pixel cluster in question represents one or more crustaceans (4) that are molting or not and/or with an indication how long it will take for the one or more crustaceans (4) represented by the reference pixel cluster in question to initiate molting, and
- using the constructed model for determining, for each detected pixel cluster, that the one or more crustaceans (4) represented by the pixel cluster are molting and/or when the one or more crustaceans (4) represented by the pixel cluster are expected to be molting.

6. The method according to claim 4 or 5, wherein the one or more images comprise a first image representing at least part of the volume of water (6) at a first time and a second image representing at least part of the volume of water (6) at a second time, wherein detecting the one or more molting regions comprises:
detecting a first pixel cluster in the first image representing one or more crustaceans (4), and
detecting a second pixel cluster in the second image representing one or more crustaceans (4), and
determining that the first and second pixel cluster represent the same one or more crustaceans (4), and
based on this determination, and based on the first resp. second pixel cluster's position within the first resp. second image, determining a movement, preferably a speed and direction of movement, of the one or more crustaceans (4) represented by the first and second pixel cluster, and
based on the determined movement, predicting a position within the volume of water, at the future time, of the one or more crustaceans (4) represented by the first and second pixel cluster.

7. The method according to any of the preceding claims, wherein detecting the one or more molting regions (12) comprises:
obtaining, for each of a plurality of positions in the volume of water (6), measurement data indicating one or more values of one or more parameters, and
determining, based on the one or more values of the one or more parameters, that one or more crustaceans (4) are molting and/or are expected to be molting at the future time, wherein the one or more parameters comprise at least one of
- an ammonia level,
- an amount of water-dissolved oxygen, and
- pH.

8. The method according to any of the preceding claims, further comprising repeating steps (i) and (ii) herewith updating the detected one or more molting regions (12) and updating the distribution of irradiance throughout the volume of water (6).

9. The method according to any of the preceding claims, further comprising:
determining, for each of the detected one or more molting regions (12), in which stage of molting the crustaceans (4) in the respective one or more molting regions (12) are, and
controlling a distribution of irradiance of light throughout the volume of water (6) on the basis of the molting stages for the respective one or more molting regions (12).

10. The method according to any of the preceding claims, further comprising luring away non-molting crustaceans (18) from the one or more molting regions (12) and/or driving non-molting crustaceans (18) away from the one or more molting region (12), preferably by providing crustacean feed outside of the one or more molting regions (12) and/or by scaring the non-molting crustaceans (18) away.

11. A system (2) for supporting molting of crustaceans (4) in a volume of water (6) at least partially enclosed by one or more barriers (8) for keeping crustaceans (4) in the volume of water (6), **characterised in that** the system comprises :
a molting region detection system (10) for detecting one or more molting regions (12) in the volume of water (6), the molting regions (12) being regions where crustaceans (4) are molting and/or are expected to be molting at a future time,
a lighting control system (14) that is configured to control a distribution of irradiance of light throughout the volume of water (6), and
a controller that is configured to perform a step of:
- based on the detected one or more regions, causing the lighting control system (14) to control the distribution of irradiance of light throughout the volume of water (6) such that each of the detected one or more molting regions (12) receives, and/or will receive at the future time, an irradiance that is lower than an irradiance that is received, and/or that will be received at the future time, by regions outside of the detected one or more molting regions (12),
wherein the system (2) comprises one or more cameras for capturing one or more images of at least part of the volume of water (6), and wherein the controller is configured to detect the one or more molting regions (12) based on image analysis of the captured images of the at least part of the volume of water (6); and/or
wherein the system comprises one or more sensors for measuring data indicative of one or more values of one or more parameters of water in at least part of the volume of water (6), and wherein the controller is configured to detect the one or more molting regions (12) based on analysis of the measurement data of parameters of water in the at least part of the volume of water (6).

12. The system (2) according to claim 11, wherein the lighting control system (14) comprises an illumination system that is configured to selectively illuminate regions within the volume of water (6).

13. The system (2) according to claim 12, wherein the illumination system comprises a plurality of separately controllable light sources (L1..L6).

14. The system according to any of claims 11-13, further comprising:
one or more cameras for capturing one or more images of at least part of the volume of water, wherein
the controller is configured to perform steps of:
- obtaining image data representing the one or more images captured by the one or more cameras, and
- identifying from the image data one or more crustaceans in one or more regions of the volume of water, and
- determining from the image data that the identified one or more crustaceans are molting and assigning the one or more regions as the one or more molting regions, and/or
- determining from the image data when and in which one or more future regions the identified one more crustaceans are expected to mold and assigning the one or more future regions as the one or more molting regions.

15. The system (2) according to any of the claims 11-14, wherein the system comprises one or more sensors, and wherein the controller is configured to perform steps of:
receiving, from the one or more sensors, measurement data indicating one or more values of one or more parameters, and
determining, based on the one or more values of the one or more parameters, that one or more crustaceans (4) are molting and/or are expected to be molting at the future time, wherein the one or more sensors comprise at least one of:
- an ammonia sensor for measuring an ammonia level at a position within the volume of water (6),
- an oxygen sensor for measuring an amount of water-dissolved oxygen at a position within the volume of water (6), and
- a pH sensor for measuring a pH at a position within the volume of water (6).

## Patentansprüche

1. Verfahren zur Unterstützung der Häutung von Krustentieren (4) in einem Wasservolumen (6), das zumindest teilweise von einer oder mehreren Barrieren (8) zum Halten von Krustentieren (4) in dem Volumen (6) umschlossen ist, **dadurch gekennzeichnet, dass** das Verfahren umfasst:
(i) Erfassen eines oder mehrerer Häutungsbereiche (12) in dem Wasservolumen (6), wobei die Häutungsbereiche (12) Bereiche sind, in denen sich Krustentiere (4) häuten und/oder sich erwartungsgemäß zu einem zukünftigen Zeitpunkt häuten werden, und
(ii) auf der Grundlage des erfassten einen oder der mehreren Häutungsbereiche (12), Steuern einer Verteilung der Bestrahlungsstärke des Lichts über das gesamte Wasservolumen (6), sodass jeder der erfassten einen oder mehreren Häutungsbereiche (12) eine Bestrahlungsstärke empfängt und/oder zu einem zukünftigen Zeitpunkt empfangen wird, die geringer ist als eine Bestrahlungsstärke, die von Bereichen außerhalb der erfassten Häutungsbereiche (12) empfangen wird und/oder zu einem zukünftigen Zeitpunkt empfangen wird,
wobei das Erfassen des einen oder der mehreren Häutungsbereiche (12) auf der Bilderfassung und Analyse von Bildern von Krustentieren (4) in zumindest einem Teil des Wasservolumens (6) basiert und/oder auf Messdaten von Wasserparametern in zumindest einem Teil des Wasservolumens (6) basiert.

2. Verfahren nach Anspruch 1, wobei das Steuern der Verteilung der Bestrahlungsstärke des Lichts das Steuern eines Beleuchtungssystems (14) umfasst, das konfiguriert ist, um selektiv Bereiche (14a.. 14f) innerhalb des Wasservolumens zu beleuchten.

3. Verfahren nach Anspruch 2, wobei das Beleuchtungssystem (14) eine Vielzahl von getrennt steuerbaren Lichtquellen (L1..L6) umfasst, wobei vorzugsweise eine oder mehrere der Vielzahl von Lichtquellen (L1..L6) in das Wasservolumen (6) eingetaucht sind, wobei:
der Schritt des Steuerns des Beleuchtungssystems (14) das separate Steuern der Vielzahl von Lichtquellen (L1..L6) des Beleuchtungssystems (14) umfasst.

4. Verfahren nach einem der Ansprüche 1 bis 3, wobei das Erfassen des einen oder der mehreren Häutungsbereiche umfasst:
- Erhalten von Bilddaten, die ein oder mehrere Bilder von mindestens einem Teil des Wasservolumens (6) darstellen, und
- Identifizieren von einem oder mehreren Krustentieren (4) in einem oder mehreren Bereichen des Wasservolumens anhand der Bilddaten, und
- Bestimmen aus den Bilddaten, dass das oder die identifizierten Krustentiere (4) sich häuten, und Zuweisen des einen oder der mehreren Bereiche als den einen oder die mehreren Häutungsbereiche (12), und/oder
- Bestimmen aus den Bilddaten, wann und in welchem einen oder mehreren zukünftigen Bereichen das identifizierte eine oder die mehreren Krustentiere (4) sich erwartungsgemäß häuten werden, und Zuweisen des einen oder der mehreren zukünftigen Bereiche als den einen oder die mehreren Häutungsbereiche (12).

5. Verfahren nach Anspruch 4, umfassend das Erfassen eines oder mehrerer Pixelcluster in dem einen oder den mehreren Bildern, wobei jedes Pixelcluster ein oder mehrere Krustentiere (4) darstellt, und das Durchführen eines maschinellen Lernverfahrens, umfassend:
- Konstruieren eines Modells auf der Grundlage von Trainingsdaten, wobei die Trainingsdaten jedem einer Vielzahl von Referenzpixelclustern, wobei jedes Referenzpixelcluster ein oder mehrere Krustentiere (4) darstellt, eine Angabe zuordnen, ob das betreffende Referenzpixelcluster ein oder mehrere Krustentiere (4) darstellt, die sich häuten oder nicht, und/oder eine Angabe, wie lange es dauert, bis das eine oder die mehreren Krustentiere (4), die durch das betreffende Referenzpixelcluster dargestellt werden, mit der Häutung beginnen, und
- Verwenden des konstruierten Modells, um für jedes erfasste Pixelcluster zu bestimmen, dass das eine oder die mehreren Krustentiere (4), die durch das Pixelcluster dargestellt werden, sich häuten und/oder wann das eine oder die mehreren Krustentiere (4), die durch das Pixelcluster dargestellt werden, sich erwartungsgemäß häuten werden.

6. Verfahren nach Anspruch 4 oder 5, wobei das eine oder die mehreren Bilder ein erstes Bild umfassen, das zumindest einen Teil des Wasservolumens (6) zu einem ersten Zeitpunkt darstellt, und ein zweites Bild, das zumindest einen Teil des Wasservolumens (6) zu einem zweiten Zeitpunkt darstellt, wobei das Erfassen des einen oder der mehreren Häutungsbereiche umfasst:
Erfassen eines ersten Pixelclusters in dem ersten Bild, das ein oder mehrere Krustentiere (4) darstellt, und
Erfassen eines zweiten Pixelclusters in dem zweiten Bild, das ein oder mehrere Krustentiere (4) darstellt, und
Bestimmen, dass der erste und der zweite Pixelcluster dasselbe oder dieselben Krustentiere (4) darstellen, und
auf der Grundlage dieser Bestimmung und auf der Grundlage der Position des ersten bzw. zweiten Pixelclusters innerhalb des ersten bzw. zweiten Bildes, Bestimmen einer Bewegung, vorzugsweise einer Geschwindigkeit und einer Bewegungsrichtung, des einen oder der mehreren Krustentiere (4), die durch das erste und zweite Pixelcluster dargestellt werden, und
auf der Grundlage der bestimmten Bewegung, Vorhersagen einer Position innerhalb des Wasservolumens zu einem zukünftigen Zeitpunkt des einen oder der mehreren Krustentiere (4), die durch den ersten und zweiten Pixelcluster dargestellt werden.

7. Verfahren nach einem der vorstehenden Ansprüche, wobei das Erfassen des einen oder der mehreren Häutungsbereiche (12) umfasst:
Erhalten von Messdaten für jede einer Vielzahl von Positionen im Wasservolumen (6), die einen oder mehrere Werte eines oder mehrerer Parameter anzeigen, und
Bestimmen, auf der Grundlage des einen oder der mehreren Werte des einen oder der mehreren Parameter, dass ein oder mehrere Krustentiere (4) sich häuten und/oder sich erwartungsgemäß zu einem zukünftigen Zeitpunkt häuten werden, wobei der eine oder die mehreren Parameter mindestens einen der folgenden Parameter umfassen:
- einen Ammoniakspiegel,
- eine Menge an in Wasser gelöstem Sauerstoff, und
- pH-Wert.

8. Verfahren nach einem der vorstehenden Ansprüche, ferner umfassend das Wiederholen der Schritte (i) und (ii) und damit das Aktualisieren des einen oder der mehreren erfassten Häutungsbereiche (12) und das Aktualisieren der Verteilung der Bestrahlungsstärke über das gesamte Wasservolumen (6).

9. Verfahren nach einem der vorstehenden Ansprüche, ferner umfassend:
Bestimmen, für jedes des erfassten einen oder der mehreren Häutungsbereiche (12), in welchem Stadium der Häutung sich die Krustentiere (4) in dem jeweiligen einen oder den mehreren Häutungsbereichen (12) befinden, und
Steuern einer Verteilung der Bestrahlungsstärke des Lichts im gesamten Wasservolumen (6) auf der Grundlage der Häutungsstadien für den jeweiligen einen oder mehrere Häutungsbereiche (12).

10. Verfahren nach einem der vorstehenden Ansprüche, ferner umfassend das Weglocken von sich nicht häutenden Krustentieren (18) aus dem einen oder den mehreren Häutungsbereichen (12) und/oder das Vertreiben von sich nicht häutenden Krustentieren (18) aus dem einen oder den mehreren Häutungsbereichen (12), vorzugsweise durch Bereitstellen von Krustentierfutter außerhalb des einen oder der mehreren Häutungsbereiche (12) und/oder durch Verscheuchen der sich nicht häutenden Krustentiere (18).

11. System (2) zur Unterstützung der Häutung von Krustentieren (4) in einem Wasservolumen (6) das zumindest teilweise von einer oder mehreren Barrieren (8) zum Halten von Krustentieren (4) in dem Volumen (6) umschlossen ist, **dadurch gekennzeichnet, dass** das System umfasst:
ein System (10) zum Erfassen von Häutungsbereichen zum Erfassen eines oder mehrerer Häutungsbereiche (12) in dem Wasservolumen (6), wobei die Häutungsbereiche (12) Bereiche sind, in denen sich Krustentiere (4) häuten und/oder sich erwartungsgemäß zu einem zukünftigen Zeitpunkt häuten werden,
ein Beleuchtungssteuerungssystem (14), das konfiguriert ist, um eine Verteilung der Bestrahlungsstärke des Lichts über das gesamte Wasservolumen (6) zu steuern, und
eine Steuerung, die konfiguriert ist, um einen Schritt durchzuführen zum:
- auf der Grundlage des erfassten einen oder der mehreren Bereiche, Veranlassen des Beleuchtungssteuerungssystems (14), die Verteilung der Bestrahlungsstärke des Lichts über das gesamte Wasservolumen (6) so zu steuern, dass jeder der erfassten einen oder mehreren Häutungsbereiche (12) eine Bestrahlungsstärke empfängt und/oder zu einem zukünftigen Zeitpunkt empfangen wird, die geringer ist als eine Bestrahlungsstärke, die von Bereichen außerhalb des erfassten einen oder der mehreren Häutungsbereiche (12) empfangen wird und/oder zu einem zukünftigen Zeitpunkt empfangen wird,
wobei das System (2) eine oder mehrere Kameras zum Aufnehmen eines oder mehrerer Bilder von mindestens einem Teil des Wasservolumens (6) umfasst, und wobei die Steuerung konfiguriert ist, um den einen oder die mehreren Häutungsbereiche (12) basierend auf einer Bildanalyse der aufgenommenen Bilder des mindestens einen Teils des Wasservolumens (6) zu erfassen; und/oder
wobei das System einen oder mehrere Sensoren zum Messen von Daten umfasst, die einen oder mehrere Werte eines oder mehrerer Parameter von Wasser in mindestens einem Teil des Wasservolumens (6) anzeigen, und wobei die Steuerung konfiguriert ist, den einen oder die mehreren Häutungsbereiche (12) auf der Grundlage einer Analyse der Messdaten von Parametern von Wasser in dem mindestens einen Teil des Wasservolumens (6) zu erfassen.

12. System (2) nach Anspruch 11, wobei das Beleuchtungssteuerungssystem (14) ein Beleuchtungssystem umfasst, das konfiguriert ist, um Bereiche innerhalb des Wasservolumens (6) selektiv zu beleuchten.

13. System (2) nach Anspruch 12, wobei das Beleuchtungssystem eine Vielzahl von getrennt steuerbaren Lichtquellen (L1..L6) umfasst.

14. System einem derAnsprüche 11 bis 13, ferner umfassend:
eine oder mehrere Kameras zum Aufnehmen eines oder mehrerer Bilder von zumindest einem Teil des Wasservolumens, wobei
die Steuerungkonfiguriert ist, um Schritte durchzuführen zum:
- Erhalten von Bilddaten, die das eine oder die mehreren Bilder darstellen, die von der einen oder den mehreren Kameras aufgenommen wurden, und
- Identifizieren von einem oder mehreren Krustentieren in einem oder mehreren Bereichen des Wasservolumens anhand der Bilddaten, und
- Bestimmen aus den Bilddaten, dass das oder die identifizierten Krustentiere sich häuten, und Zuweisen des einen oder der mehreren Bereiche als den einen oder die mehreren Häutungsbereiche, und/oder
- Bestimmen aus den Bilddaten, wann und in welchem einen oder mehreren zukünftigen Bereichen das identifizierte eine oder die mehreren Krustentiere sich erwartungsgemäß häuten werden, und Zuweisen des einen oder der mehreren zukünftigen Bereiche als den einen oder die mehreren Häutungsbereiche.

15. System (2) nach einem der Ansprüche 11 bis 14, wobei das System einen oder mehrere Sensoren umfasst und wobei die Steuerung konfiguriert ist, um die Schritte durchzuführen zum:
Empfangen von Messdaten von dem einen oder den mehreren Sensoren, die einen oder mehrere Werte eines oder mehrerer Parameter anzeigen, und
Bestimmen, auf der Grundlage des einen oder der mehreren Werte des einen oder der mehreren Parameter, dass ein oder mehrere Krustentiere (4) sich häuten und/oder sich erwartungsgemäß zu einem zukünftigen Zeitpunkt häuten werden, wobei der eine oder die mehreren Sensoren mindestens eines umfassen von:
- einem Ammoniaksensor zum Messen eines Ammoniakspiegels an einer Position innerhalb des Wasservolumens (6),
- einem Sauerstoffsensor zum Messen einer Menge an im Wasser gelöstem Sauerstoff an einer Position innerhalb des Wasservolumens (6), und
- einem pH-Sensor zum Messen eines pH-Werts an einer Position innerhalb des Wasservolumens (6).

## Revendications

1. Procédé permettant de prendre en charge la mue de crustacés (4) dans un volume d'eau (6) au moins partiellement fermé par une ou plusieurs barrières (8) permettant de garder les crustacés (4) dans le volume (6), **caractérisé en ce que** le procédé comprend :
(i) la détection d'une ou plusieurs régions de mue (12) dans le volume d'eau (6), les régions de mue (12) étant des régions où des crustacés (4) sont en train de muer et/ou sont censés être en train de muer à un moment futur, et
(ii) en fonction de la ou des régions de mue (12) détectées, la commande d'une distribution d'irradiance de lumière sur l'ensemble du volume d'eau (6) de telle sorte que chacune parmi la ou les régions de mue (12) détectées reçoit, et/ou recevra au moment futur, une irradiance qui est inférieure à une irradiance qui est reçue, et/ou qui sera reçue au moment futur respectivement, par des régions à l'extérieur des régions de mue (12) détectées,
dans lequel la détection de la ou des régions de mue (12) est en fonction d'une acquisition d'image et d'une analyse d'images de crustacés (4) dans au moins une partie du volume d'eau (6) et/ou en fonction de données de mesure de paramètres d'eau dans au moins une partie du volume d'eau (6).

2. Procédé selon la revendication 1, dans lequel la commande de la distribution d'irradiance de lumière comprend la commande d'un système d'illumination (14) qui est configuré pour illuminer sélectivement des régions (14a.. 14f) au sein du volume d'eau.

3. Procédé selon la revendication 2, dans lequel le système d'illumination (14) comprend une pluralité de sources de lumière (L1..L6) commandables séparément, de préférence une ou plusieurs parmi la pluralité de sources de lumière (L1..L6) étant immergées dans le volume d'eau (6), dans lequel :
l'étape de commande du système d'illumination (14) comprend la commande séparée de la pluralité de sources de lumière (L1..L6) du système d'illumination (14).

4. Procédé selon l'une quelconque des revendications 1 à 3, dans lequel la détection de la ou des régions de mue comprend :
- l'obtention de données d'image représentant une ou plusieurs images d'au moins une partie du volume d'eau (6), et
- l'identification à partir des données d'image d'un ou plusieurs crustacés (4) dans une ou plusieurs régions du volume d'eau, et
- la détermination à partir des données d'image que le ou les crustacés (4) identifiés sont en train de muer et l'affectation de la ou des régions en tant que région(s) de mue (12), et/ou
- la détermination à partir des données d'image du moment où, et de la ou des régions futures dans lesquelles, le ou les crustacés (4) identifiés sont censés muer et l'affectation de la ou des régions en tant que région(s) de mue (12).

5. Procédé selon la revendication 4, comprenant la détection d'une ou plusieurs grappes de pixels dans la ou les images, chaque grappe de pixels représentant un ou plusieurs crustacés (4), et la mise en œuvre d'un procédé d'apprentissage automatique comprenant :
- la construction d'un modèle en fonction de données d'entraînement, les données d'entraînement associant chacune parmi une pluralité de grappes de pixels de référence, chaque grappe de pixels de référence représentant un ou plusieurs crustacés (4), avec une indication indiquant si la grappe de pixels de référence en question représente un ou plusieurs crustacés (4) qui sont en train de muer ou non et/ou avec une indication de la durée qu'il faudra pour que le ou les crustacés (4) représentés par la grappe de pixels de référence en question initient une mue, et
- l'utilisation du modèle construit pour déterminer, pour chaque grappe de pixels détectée, que le ou les crustacés (4) représentés par la grappe de pixels sont en train de muer et/ou le moment où le ou les crustacés (4) représentés par la grappe de pixels sont censés être en train de muer.

6. Procédé selon la revendication 4 ou 5, dans lequel la ou les images comprennent une première image représentant au moins une partie du volume d'eau (6) à un premier moment et une seconde image représentant au moins une partie du volume d'eau (6) à un second moment, dans lequel la détection de la ou des régions de mue comprend :
la détection d'une première grappe de pixels dans la première image représentant un ou plusieurs crustacés (4), et
la détection d'une seconde grappe de pixels dans la seconde image représentant un ou plusieurs crustacés (4), et
la détermination que les première et seconde grappes de pixels représentent le ou les mêmes crustacés (4), et
en fonction de cette détermination, et en fonction de la position de la première ou de la seconde grappe de pixels au sein respectivement de la première ou de la seconde image, la détermination d'un déplacement, de préférence une vitesse et une direction de déplacement, du ou des crustacés (4) représentés par la première et la seconde grappe de pixels, et
en fonction du déplacement déterminé, la prédiction d'une position au sein du volume d'eau, au moment futur, du ou des crustacés (4) représentés par la première et la seconde grappe de pixels.

7. Procédé selon l'une quelconque des revendications précédentes, dans lequel la détection de la ou des régions de mue (12) comprend :
l'obtention, pour chacune parmi une pluralité de positions dans le volume d'eau (6), de données de mesure indiquant une ou plusieurs valeurs d'un ou plusieurs paramètres, et
la détermination, en fonction de la ou des valeurs du ou des paramètres, qu'un ou plusieurs crustacés (4) sont en train de muer et/ou sont censés être en train de muer au moment futur, dans lequel le ou les paramètres comprennent au moins l'un parmi
- un taux d'ammoniac,
- une quantité d'oxygène dissous dans l'eau, et
- le pH.

8. Procédé selon l'une quelconque des revendications précédentes, comprenant en outre la répétition des étapes (i) et (ii) avec une mise à jour de la ou des régions de mue (12) détectées et la mise à jour de la distribution d'exposition aux rayonnements sur l'ensemble du volume d'eau (6).

9. Procédé selon l'une quelconque des revendications précédentes, comprenant en outre :
la détermination, pour chacune parmi la ou les régions de mue (12) détectées, du stade de mue dans lequel les crustacés (4) dans la ou les régions de mue (12) respectives se trouvent, et
la commande d'une distribution d'irradiance de lumière sur l'ensemble du volume d'eau (6) en fonction des stades de mue pour la ou les régions de mue (12) respectives.

10. Procédé selon l'une quelconque des revendications précédentes, comprenant en outre le fait d'appâter des crustacés non en mue (18) à l'écart de la ou des régions de mue (12) et/ou de conduire les crustacés non en mue (18) à l'écart de la ou des régions de mue (12), de préférence en fournissant au crustacé de la nourriture à l'extérieur de la ou des régions de mue (12) et/ou en effrayant les crustacés non en mue (18) pour les éloigner.

11. Système (2) permettant de prendre en charge la mue de crustacés (4) dans un volume d'eau (6) au moins partiellement fermé par une ou plusieurs barrières (8) permettant de garder des crustacés (4) dans le volume d'eau (6), **caractérisé en ce que** le système comprend :
un système de détection de région de mue (10) permettant de détecter une ou plusieurs régions de mue (12) dans le volume d'eau (6), les régions de mue (12) étant des régions où des crustacés (4) sont en train de muer et/ou sont censés être en train de muer à un moment futur,
un système de commande d'éclairage (14) qui est configuré pour commander une distribution d'irradiance de lumière sur l'ensemble du volume d'eau (6), et
un organe de commande qui est configuré pour mettre en œuvre une étape consistant à :
- en fonction de la ou des régions détectées, amener le système de commande d'éclairage (14) à commander la distribution d'irradiance de lumière sur l'ensemble du volume d'eau (6) de telle sorte que chacune parmi la ou les régions de mue (12) détectées reçoit, et/ou recevra au moment futur, une irradiance qui est inférieure à une irradiance qui est reçue, et/ou qui sera reçue au moment futur, par des régions à l'extérieur de la ou des régions de mue (12) détectées,
dans lequel le système (2) comprend une ou plusieurs caméras permettant de capturer une ou plusieurs images d'au moins une partie du volume d'eau (6), et dans lequel l'organe de commande est configuré pour détecter la ou les régions de mue (12) en fonction d'une analyse d'image des images capturées de l'au moins une partie du volume d'eau (6) ; et/ou
dans lequel le système comprend un ou plusieurs capteurs permettant de mesurer des données indiquant une ou plusieurs valeurs d'un ou plusieurs paramètres d'eau dans au moins une partie du volume d'eau (6), et dans lequel l'organe de commande est configuré pour détecter la ou les régions de mue (12) en fonction d'une analyse des données de mesure de paramètres d'eau dans l'au moins une partie du volume d'eau (6).

12. Système (2) selon la revendication 11, dans lequel le système de commande d'éclairage (14) comprend un système d'illumination qui est configuré pour illuminer sélectivement des régions au sein du volume d'eau (6).

13. Système (2) selon la revendication 12, dans lequel le système d'illumination comprend une pluralité de sources de lumière (L1..L6) commandables séparément.

14. Système selon l'une quelconque des revendications 11 à 13, comprenant en outre :
une ou plusieurs caméras permettant de capturer une ou plusieurs images d'au moins une partie du volume d'eau, dans lequel
l'organe de commande est configuré pour mettre en œuvre des étapes consistant à :
- obtenir des données d'image représentant la ou les images capturées par la ou les caméras, et
- identifier à partir des données d'image un ou plusieurs crustacés dans une ou plusieurs régions du volume d'eau, et
- déterminer à partir des données d'image que le ou les crustacés identifiés sont en train de muer et affecter la ou les régions en tant que région(s) de mue, et/ou
- déterminer à partir des données d'image le moment où, et la ou les régions futures dans lesquelles le ou les crustacés identifiés sont censés muer et affecter la ou les régions en tant que région(s) de mue.

15. Système (2) selon l'une quelconque des revendications 11 à 14, dans lequel le système comprend un ou plusieurs capteurs, et dans lequel l'organe de commande est configuré pour mettre en œuvre des étapes consistant à :
recevoir, en provenance du ou des capteurs, des données de mesure indiquant une ou plusieurs valeurs d'un ou plusieurs paramètres, et
déterminer, en fonction de la ou des valeurs du ou des paramètres, qu'un ou plusieurs crustacés (4) sont en train de muer et/ou sont censés être en train de muer au moment futur, dans lequel le ou les paramètres comprennent au moins l'un parmi :
- un capteur d'ammoniac permettant de mesurer un taux d'ammoniac au niveau d'une position au sein du volume d'eau (6),
- un capteur d'oxygène permettant de mesurer une quantité d'oxygène dissous dans l'eau au niveau d'une position au sein du volume d'eau (6), et
- un capteur de pH permettant de mesurer un pH au niveau d'une position au sein du volume d'eau (6).
